# EUROPÄISCHE PATENTSCHRIFT

(11) **EP 1 959 221 B1**
(45) Veröffentlichungstag und Bekanntmachung des Hinweises auf die Patenterteilung: **21.09.2011**
(21) Anmeldenummer: 07024030.4
(22) Anmeldetag: 12.12.2007
(51) Int. Cl.: F41G 1/00, F41G 11/00

(54) **Betätigungselement**
Actuating element
Elément d'actionnement

(30) Priorität: 14.02.2007 AT 2282007
(43) Veröffentlichungstag der Anmeldung: 20.08.2008
(73) Patentinhaber: Swarovski-Optik KG., 6067 Absam (AT)
(72) Erfinder: Menges, Dietmar, 6067 Absam (AT); Wiedermann, Helmut, 6130 Pill (AT)
(74) Vertreter: Torggler, Paul Norbert

(56) Entgegenhaltungen:
- EP-A1- 0 656 519
- WO-A1-2006/017869
- US-A1- 2004 144 013
- US-B1- 6 691 447

## Beschreibung

Die vorliegende Erfindung betrifft ein Betätigungselement zum Einstellen zumindest einer optischen Eigenschaft, insbesondere der Lage einer Zielmarke, einer Zieleinrichtung, insbesondere eines Zielfernrohres, mit einem um eine Rotationsachse drehbaren Kupplungsteil, auf das zumindest ein Indexelement aufschiebbar ist. Darüber hinaus betrifft die Erfindung auch eine Zieleinrichtung, insbesondere Zielfernrohr, mit einem solchen Betätigungselement.

Gattungsgemäße, auch als Stelltürme bezeichnete, Betätigungselemente mit einem oder mehreren aufschiebbaren Indexelementen können z.B. zur Ballistikkorrektur einer Zielmarke bzw. eines Absehens einer Zieleinrichtung oder eines Zielfernrohres verwendet werden. Bei der Ballistikkorrektur geht es darum, die Zielmarke in Abhängigkeit der Zielentfernung auf die Ballistikeigenschaften der verwendeten Munition oder auf Ballistikeigenschaften von verschiedenen Munitionstypen einzustellen. Die Indexelemente können über entsprechende Indexmarken dann die jeweils für die Schussentfernung und/oder den verwendeten Munitionstyp zu wählende Stellung des Betätigungselementes und damit der Zielmarke anzeigen.

Beim Stand der Technik ist es bekannt, für verschiedene Ballistiken verschiedene Betätigungselemente zu verwenden. Dies ist sehr aufwendig, da jedes Mal das Betätigungselement gewechselt werden muss. Darüber hinaus ist es beim Stand der Technik auch bekannt, ringförmige Indexelemente auf ein Kupplungsteil des Betätigungselementes aufzuschieben. Die Indexelemente sind dann so lange gegeneinander und gegen das Kupplungsteil verdrehbar auf diesem gelagert, so lange nicht ein Reibschluss durch Anschrauben einer Abdeckung herbeigeführt wird. Hierdurch besteht die Gefahr, dass vor oder durch Anschrauben der Abdeckung ein ungewolltes Verstellen der vorab eingestellten Indexelemente passiert.

Die WO 2006/017869 A1 zeigt ein Betätigungselement für ein Zielfernrohr, bei dem die Indexmarken mit dem Kupplungsteil reibschlüssig verbunden sind, mit der Maßgabe, dass eine Verstellung der einzelnen Indexmarken zu jeder Zeit möglich sein soll. Aufgabe der Erfindung ist es, ein gattungsgemäßes Betätigungselement dahingehend zu verbessern, dass das geschilderte unbeabsichtigte Verstellen der Indexelemente vermieden ist.

Dies wird erfindungsgemäß dadurch erreicht, dass das Betätigungselement eine Führungseinrichtung zur Führung des Indexelementes auf dem Kupplungsteil aufweist, die ein Aufschieben des Indexelementes in Richtung der Rotationsachse des Kupplungsteils auf das Kupplungsteil ermöglicht und ein Verdrehen des Indexelementes relativ zum Kupplungsteil im auf das Kupplungsteil vollständig und/oder teilweise aufgeschobenen Zustand zumindest in einer Richtung senkrecht zur Rotationsachse, vorzugsweise in allen Richtungen, verhindert.

Gemäß einer Grundidee der Erfindung ist somit vorgesehen, dass die Führungseinrichtung zwar ein Aufschieben des oder der Indexelemente auf das Kupplungsteil ermöglicht. Die Indexelemente, wenn sie einmal auf das Kupplungsteil aufgeschoben sind, aber mittels der Führungseinrichtung drehfest auf diesem gehalten sind und somit kein Verdrehen in einer Ebene senkrecht zur Rotationsachse mehr möglich ist. Die Indexelemente werden somit in der Winkelstellung auf das Kupplungsteil aufgeschoben, in der sie dann auch verbleiben sollen, bis sie zur Änderung der relativen Lage der Indexelemente wieder vom Kupplungsteil abgezogen werden.

Dabei kann vorgesehen sein, dass die Führungseinrichtung ein Aufschieben des Indexelementes auf das Kupplungsteil in mehreren, voneinander verschiedenen, auf die Rotationsachse bezogenen, Winkelstellungen ermöglicht. Dabei ist es günstig, wenn die mehreren, voneinander verschiedenen Winkelstellungen, vorzugsweise gleichmäßig, inkrementiert sind. Unter einer Inkrementierung ist dabei zu verstehen, dass die Winkelstellungen nicht kontinuierlich sondern in diskreten Abständen voneinander, also einer gewissen Teilung, folgend bzw. schrittweise realisierbar sind.

In der Regel ist es sinnvoll, dass mehrere, vorzugsweise zwei oder drei oder vier, Indexelemente auf das Kupplungsteil aufschiebbar sind, wobei diese Indexelemente gleichzeitig auf dem Kupplungsteil angeordnet sein können.

Eine bevorzugte Ausführungsform sieht vor, dass die Führungseinrichtung eine Verzahnung mit parallel zur Rotationsachse des Kupplungsteils verlaufenden und im auf das Kupplungsteil aufgeschobenen Zustand des Indexringes (der Indexringe) ineinandergreifenden Erhebungen und Vertiefungen aufweist. Die Erhebungen und Vertiefungen können dabei in Form von Zähnen aber auch anderweitig ausgeformt sein, so lange sie ein unbeabsichtigtes Verdrehen der Indexelemente gegen das Kupplungsteil im aufgeschobenen Zustand verhindern.

Grundsätzlich reicht es aus, wenn die Führungseinrichtung ein erstes Führungselement mit zumindest einer Erhöhung oder Vertiefung und ein zweites Führungselement mit mehreren Erhöhungen oder Vertiefungen aufweist, wobei die zumindest eine Erhöhung oder Vertiefung des ersten Führungselementes im auf den Kupplungsteil aufgeschobenen Zustand des Indexringes (der Indexringe) mit den Erhöhungen oder Vertiefungen des zweiten Führungselements in Eingriff steht. Dabei kann das erste Führungselement an dem Kupplungsteil, vorzugsweise an einer Außenmantelfläche des Kupplungsteils angeordnet, vorzugsweise einstückig angeformt sein und das zweite Führungselement an dem Indexelement, vorzugsweise in einer Ausnehmung des Indexelementes, angeordnet, vorzugsweise einstückig angeformt, sein oder umgekehrt. Eine besonders bevorzugte Ausführungsform sieht jedoch vor, dass das erste Führungselement und/oder das zweite Führungselement eine Abfolge von sich über einen Winkelbereich von 360° erstreckenden, vorzugsweise gleichmäßig inkrementierten, Erhöhungen und Vertiefungen aufweist (aufweisen).

Um ein Verlieren der einmal auf das Kupplungsteil aufgesteckten Indexelemente zu verhindern, kann zusätzlich eine am Betätigungselement fixierbare, vorzugsweise auf das Betätigungselement aufschraubbare, Abdeckung vorgesehen sein, welche im auf dem Betätigungselement fixierten Zustand ein Abziehen bzw. Abrutschen des oder der Indexelemente vom Kupplungsteil unterbindet. Im Gegensatz zum Stand der Technik ist diese Abdeckung lediglich ein zusätzlicher Schutz. Sie ist nicht notwendig, um ein ungewolltes Verdrehen der Indexelemente gegen das Kupplungsteil zu verhindern.

Weitere Einzelheiten und Merkmale der vorliegenden Erfindung werden anhand eines bevorzugten Ausführungsbeispiels in der nun folgenden Figurenbeschreibung dargelegt. Dabei zeigen:
- Fig. 1: eine Seitenansicht auf das bevorzugte Ausführungsbeispiel,
- Fig. 2: einen Längsschnitt durch das Betätigungselement gemäß Fig. 1,
- Fig. 3: eine Draufsicht auf das Betätigungselement gemäß Fig. 1 und
- Fig. 4: eine perspektivische Seitenansicht eines vorderen Teils eines Zielfernrohres mit dem erfindungsgemäßen Betätigungselement gemäß der Fig. 1 bis 3, wobei die Abdeckung, das Kupplungsteil und die Indexelemente vom Rest des Betätigungselementes abgenommen dargestellt sind.

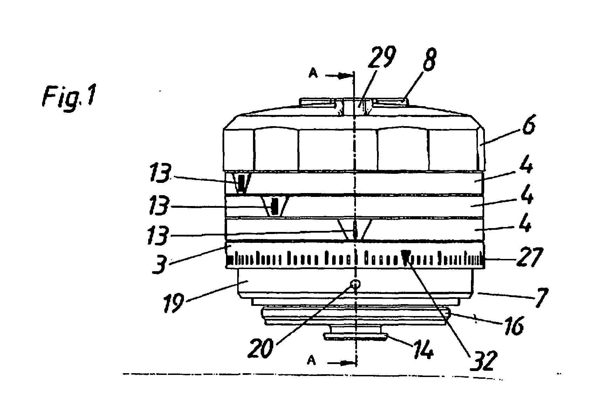

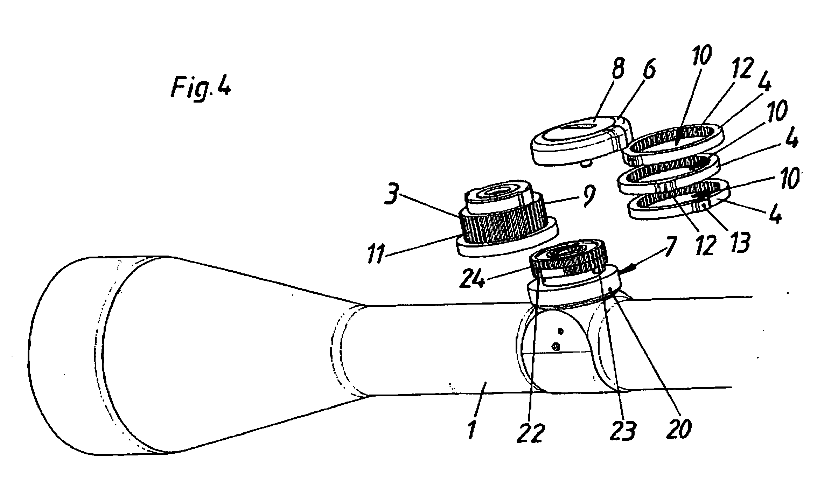

In der Seitenansicht gemäß Fig. 1 sind zunächst die mit der Schraube 8 aufgeschraubte Abdeckung 6 sowie die darunter liegenden drei Indexelemente 4 im auf das Kupplungsteil 3 aufgeschobenen Zustand zu sehen. Jedes der Indexelemente 4 trägt eine Indexmarke 13, die das rasche Auffinden der für die jeweilige Entfernung und/oder den jeweiligen Munitionstyp notwendigen Ballistikkorrekturstellung ermöglicht. Der untere Ring des Kupplungsteils 3 trägt die Beschriftung 27, die die Teilung bzw. Inkrementierung der verschiedenen Winkelstellungen, in denen die Indexelemente 4 auf das Kupplungsteil 3 aufschiebbar sind, zeigen. Teil der Beschriftung 27 ist der Nullpunkt 32, dessen Funktion weiter unten erläutert wird. Auf einem drehfest mit dem Rastgehäuse 16 bzw. dem Zielfernrohr verbundenen bzw. verbindbaren Zwischengehäuse 19 ist die sogenannte Nullindexmarke 20 angebracht. Unten aus dem Rastgehäuse 16 steht eine Spindel 14 hervor, die - wie weiter unten im Detail erläutert - durch Drehen des Kupplungsteils 3 in das Rastgehäuse 16 ein- und ausschraubbar ist. Die Spindel 14 drückt - wie an sich bekannt, hier aber nicht im Detail dargestellt - auf ein im Hauptrohr 1 des in Fig. 4 beispielhaft dargestellten Zielfernrohres angeordnetes Innenrohr, welches die Zielmarke bzw. das Absehen trägt. Durch Ein- und/oder Ausschrauben der Spindel 14 kann so die Lage des Absehens bzw. der Zielmarke im Hauptrohr 1 des Zielfernrohres und damit im Durchblick durch das Zielfernrohr verstellt werden. Als Zielmarken kommen dabei alle beim Stand der Technik bekannten, zum Zielen und/oder Schätzen der Entfernung od. dgl. verwendeten, Markierungen wie z.B. Fadenkreuze in Frage.

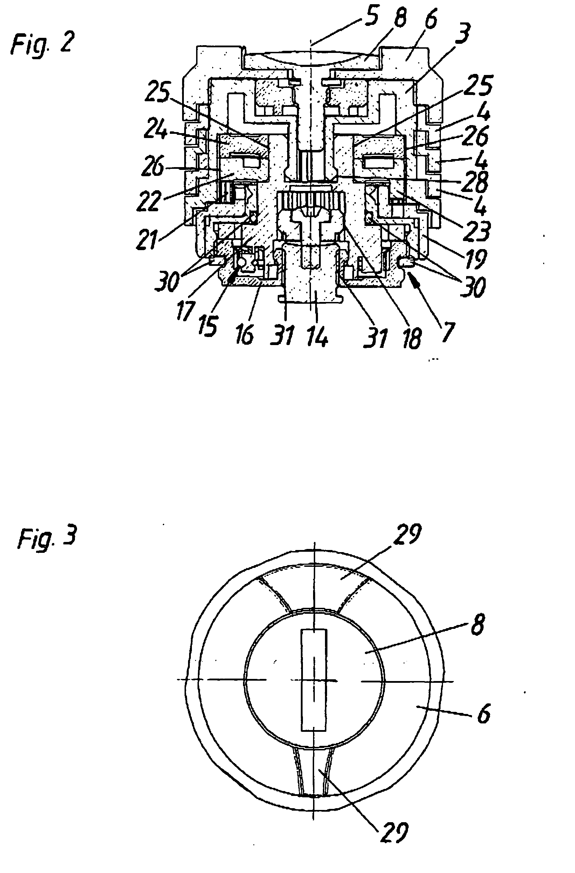

Bevor das Einstellen bzw. Justieren des Betätigungselementes anhand von Fig. 2 im Detail erklärt wird, wird mit Verweis auf Fig. 4 zunächst einmal die erfindungsgemäße Ausgestaltungsform der Führungseinrichtung 11, 12 zur Führung der Indexelemente 4 auf dem Kupplungsteil 3 erläutert. In dieser Darstellung sind der Kupplungsteil 3 von der Übertragungseinrichtung 7 sowie die Indexelemente 4 vom Kupplungsteil 3 abgezogen dargestellt. Das gleiche gilt für die Abdeckung 6 und die zugeordnete Schraube 8. Der Kupplungsteil 3 weist in einem Bereich, der für das Aufstecken der Indexelemente 4 vorgesehen ist, eine im Wesentlichen Zylinderförmige Außenmantelfläche 9 auf. Der Begriff im Wesentlichen zylinderförmig bezieht sich dabei auf die Grundform der Außenmantelfläche 9, welche vom ersten Führungselement 11 der Führungseinrichtung überlagert ist. Als erstes Führungselement 11 sind auf dieser Außenmantelfläche 9 eine Vielzahl von parallel zur Rotationsachse 5 des Kupplungsteils 3 verlaufende Erhebungen und Vertiefungen vorgesehen. Diese sind in diesem Beispiel einstückig an der Außenmantelfläche 9 angeordnet. Dies muss aber nicht zwingend so sein. Die Indexelemente 4 sind im Wesentlichen ringförmig ausgebildet und weisen jeweils eine im Wesentlichen kreisförmige Ausnehmung 10 auf, an der jeweils ein zweites Führungselement 12 in Form einer zur Verzahnung des ersten Führungselementes 11 komplementären Verzahnung vorgesehen ist. Auch hier sind die Erhebungen und Vertiefungen der Verzahnung einstückig an die Indexelemente 4 angeformt. Auch dies ist nicht zwingend notwendig. Im gezeigten Ausführungsbeispiel erstreckt sich die Verzahnung des ersten und zweiten Führungselementes 11 und 12 jeweils mit gleichmäßiger Inkrementierung bzw. Zahnteilung über einen Winkelbereich von 360°. Auch dies muss nicht zwingend so sein. Es würde auch ausreichen, wenn entweder das erste oder das zweite Führungselement 11, 12 nur eine Erhebung oder nur eine Vertiefung aufweisen würden. Auch dies würde eine verdrehfeste Anordnung der Indexelemente 4 auf dem Kupplungsteil 3 sicherstellen.

In Fig. 4 sind durch das Abziehen des Kupplungsteiles 3 die sonst innen liegend im Kupplungsteil angeordnete Stellscheibe 24 sowie Anschlagscheibe 22 zu sehen. Auch diese tragen Verzahnungen, die mit einer in Fig. 4 nicht sichtbaren Innenverzahnung 26 des Kupplungsteils 3 im aufgesteckten Zustand in Eingriff stehen.

Die Funktionsweise der in diesem Ausführungsbeispiel gewählten Übertragungseinrichtung 7 zur Übertragung einer Drehbewegung des Kupplungsteils 3 auf die Spindel 14 wird nun anhand der Schnittdarstellung gemäß Fig. 2 erläutert. Im in dieser Figur dargestellten aufgesteckten Zustand sind die Abdeckung 6, der Kupplungsteil 3 sowie die Indexelemente 4 drehfest miteinander verbunden. Über eine Verzahnung 26 gilt dies auch für die Stellscheibe 24 und die Anschlagscheibe 22. Die Stellscheibe 24 ist über eine Verzahnung 25 wiederum drehfest mit einer Mutter 17 verbunden. Das Kupplungsteil 3 lagert mittels der Schnappverbindung 28 in einer entsprechenden Ausnehmung der Mutter 17. Die Schraube 8 zur Befestigung der Abdeckung 6 kann günstigerweise so weit in den Kupplungsteil 3 eingeschraubt werden, dass ein ungewolltes Lösen der Schnappverbindung 28 in der in Fig. 2 gezeigten Montagestellung durch Blockieren der Schnappbewegung verhindert wird. Im Inneren der Mutter 17 ist eine Verzahnung 18 vorgesehen, welche wiederum in Richtung parallel zur Rotationsachse 5 verlaufende Zähne aufweist. In diese greift eine entsprechende Verzahnung der Spindel 14 ein, wodurch durch Drehen des Kupplungsteils 3 die Spindel 14 gedreht werden kann. Beim Drehen der Spindel 14 in die jeweils entsprechende Richtung erfolgt über das zwischen dem Rastgehäuse 16 und der Spindel 14 angeordnete Gewinde 31 ein Ein- oder Ausschrauben der Spindel. Das Rastgehäuse 16 sowie das damit drehfest verbundene Zwischengehäuse 19 sind im auf das Zielfernrohr aufgesteckten Zustand drehfest mit dem Hauptrohr 1 des Zielfernrohres verbunden. Die Dichtungen 30 garantieren die gasdichte Ausführung des Betätigungselementes.

Beim Rotieren des Kupplungsteils 3 um die Rotationsachse 5 findet somit eine Relativverdrehung der drehfest mit dem Kupplungsteil 3 verbundenen Bauteile gegen das Zwischengehäuse 19 und das Rastgehäuse 16 statt. Zwischen der Mutter 17 und dem Rastgehäuse 16 ist eine Rasteinrichtung 15 vorgesehen, die ein inkrementiertes, also schrittweises Verdrehen des Kupplungsteils 3 bzw. der Übertragungseinrichtung 7 sicherstellt. Die Teilung bzw. Inkrementierung der Rasteinrichtung 15 entspricht dabei günstigerweise der mittels der Beschriftung 27 visualisierten Inkrementierung bzw. Teilung der Verzahnung der Führungselemente 11 und 12, also der durch die Führungseinrichtung vorgegebenen Inkrementierung zum Aufschieben der Indexelemente 4 auf das Kupplungsteil 3.

Um eine eindeutige Zuordnung zu garantieren, ist der maximale Drehwinkel auf unter 360° eingeschränkt. Hierfür trägt die im aufgesteckten Zustand drehfest mit dem Kupplungsteil 3 verbundene Anschlagscheibe 22 eine Anschlagnase 23, die bei einem entsprechenden Verdrehwinkel an dem am Zwischengehäuse 19 in seiner Position fixierten Anschlagstift 21 anschlägt und damit den maximal möglichen Drehwinkel begrenzt.

Durch die geschilderte Konstruktion mit den entsprechenden Verzahnungen 11, 12, 25, 26 und 15 wird eine Ausrichtung zwischen der Beschriftung 27, der Rasteinrichtung 15 und dem Nullindex 20 und zusätzlich auch den Indexmarken 13 der Indexelemente 4 sichergestellt. Zwischen Beschriftung 27 und den Indexelementen 4 besteht somit im aufgeschobenen Zustand Ausrichtung. Die Beschriftung 27 dient der Einstellung der azimutalen Positionen der Indexelemente 4 relativ zur Grundstellung. Dazu besitzt die Beschriftung 27 den Nullpunkt 32. In einer Tabelle oder dergleichen kann die Anzahl der Teilstriche angegeben sein, um die die Indexelemente 4 gegenüber dem Nullpunkt 32 verdreht auf das Kupplungsteil 3 aufzusetzen sind, abhängig von Ballistik und Zielentfernung. Diese Einstellung somit kann auch bei abgenommenem Kupplungsteil erfolgen. Nach Grundjustierung wird dann das Kupplungsteil so aufgesetzt, dass der Nullpunkt 32 über dem Nullindex 20 steht.

Zusätzlich trägt die Abdeckung 6 noch ein pfeilartiges Gestaltungselement 29, das günstigerweise in der in Fig. 1 gezeigten Stellung, in der die unterste Indexmarke 13 direkt über dem Nullindex 20 angeordnet ist, ebenfalls in Richtung des Nullindex 20 weist. Der Nullindex 20 zeigt dabei günstigerweise in Richtung des in Fig. 4 nicht dargestellten Okulars und damit in Richtung des Benutzers. Auch bei einer Draufsicht gemäß Fig. 3 ist durch das Gestaltungselement 29 somit einfach zu erkennen, ob sich das Betätigungselement in der Grundeinstellung befindet oder nicht.

Zur Grundjustierung des Zielfernrohres zur Waffe werden zunächst die Abdeckung 6 sowie der Kupplungsteil 3 von der Übertragungseinrichtung 7 abgezogen. Dadurch kommt, wie in Fig. 4 dargestellt, die Stellscheibe 24 zum Vorschein. Durch Drehen der Stellscheibe 24 und der damit verbundenen Bewegung der Spindel 14 kann die Grundjustierung vorgenommen werden. Die Anschlagscheibe 22 ist dabei lose drehbar auf der Mutter 17 gelagert. Nach dieser Grundjustierung wird die Anschlagscheibe 22 so weit gedreht, bis die Anschlagnase 23 den Anschlagstift 21 berührt. Danach wird das Kupplungsteil 3 aufgesetzt, wodurch es zu einer Arretierung zwischen Anschlagscheibe 22, Stellscheibe 24 und Kupplungsteil 3 über die Verzahnung 26 kommt. Nun können nacheinander für verschiedene Entfernungen und/oder Munitionstypen die jeweiligen Stellungen der Zielmarke durch Verdrehen der Spindel 14 gesucht werden. Ist eine solche Position gefunden, so wird das dafür vorgesehene Indexelement 4 mit entsprechend ausgerichteter Indexmarke 13 aufgeschoben, wodurch das Indexelement 4 dann drehfest am Kupplungsteil 3 gelagert ist, sodass ohne eine Gefahr des weiteren Verstellens des bereits aufgeschobenen Indexelementes 4 die Position für die nächste Indexmarke 13 des nächsten Indexelementes 4 aufgesucht werden kann. Nachdem in dieser Weise auch die letzte Indexmarke 13 ausgerichtet ist, kann die Abdeckung 6 mittels der Schraube 8 aufgeschraubt werden. Der Justiervorgang ist damit beendet.

Wie bereits dargelegt, ist der Begriff der Verzahnung sehr allgemein zu sehen. Die dafür vorgesehenen Erhöhungen und Vertiefungen können in verschiedenster Art und Weise ausgestaltet sein. Darüber hinaus muss eine erfindungsgemäße Führungseinrichtung auch nicht zwingend die in Fig. 4 dargestellten Verzahnungen der Führungselemente 11 und 12 aufweisen. Es wäre z.B. alternativ auch möglich, entsprechende Verzahnungen od. dgl. an der Außenseite der Indexelemente 4 vorzusehen, die dann von einem separaten, außen am Kupplungsteil 3 gelagerten Stift im aufgesteckten Zustand drehfest mit dem Kupplungsteil 3 arretiert werden. Darüber hinaus wäre es beispielsweise auch möglich, anstelle der Innen- oder Außenverzahnungen in den Indexelementen 4 entsprechend in ihrer Entfernung voneinander inkrementierte Löcher vorzusehen, welche wiederum durch einen entsprechend am Kupplungsteil 3 angeordneten Stift drehfest fixierbar sind. Darüber hinaus existieren auch andere erfindungsgemäße Ausführungsvarianten einer entsprechenden Führungseinrichtung.

## Patentansprüche

1. Betätigungselement zum Einstellen zumindest einer optischen Eigenschaft, insbesondere der Lage einer Zielmarke, einer Zieleinrichtung, insbesondere eines Zielfernrohres, mit einem um eine Rotationsachse drehbaren Kupplungsteil, auf das zumindest ein Indexelement aufschiebbar ist, **dadurch gekennzeichnet, dass** das Betätigungselement eine Führungseinrichtung (11, 12) zur Führung des Indexelementes (4) auf dem Kupplungsteil (3) aufweist, die ein Aufschieben des Indexelementes (4) in Richtung der Rotationsachse (5) des Kupplungsteils (3) auf das Kupplungsteil (3) ermöglicht und ein Verdrehen des Indexelementes (4) relativ zum Kupplungsteil (3) im auf das Kupplungsteil (3) vollständig und/oder teilweise aufgeschobenen Zustand zumindest in einer Richtung senkrecht zur Rotationsachse (5), vorzugsweise in allen Richtungen, verhindert.

2. Betätigungselement nach Anspruch 1, **dadurch gekennzeichnet, dass** die Führungseinrichtung (11, 12) ein Aufschieben des Indexelementes (4) auf das Kupplungsteil (3) in mehreren, voneinander verschiedenen, auf die Rotationsachse (5) bezogenen, Winkelstellungen ermöglicht.

3. Betätigungselement nach Anspruch 2, **dadurch gekennzeichnet, dass** die mehreren, voneinander verschiedenen Winkelstellungen, vorzugsweise gleichmäßig, inkrementiert sind.

4. Betätigungselement nach einem der Ansprüche 1 bis 3, **dadurch gekennzeichnet, dass** mehrere, vorzugsweise zwei oder drei oder vier, Indexelemente (4) auf das Kupplungsteil (3) aufschiebbar sind, wobei diese Indexelemente (4) gleichzeitig auf dem Kupplungsteil (3) angeordnet sein können.

5. Betätigungselement nach einem der Ansprüche 1 bis 4, **dadurch gekennzeichnet, dass** das Kupplungsteil (3) zumindest in dem für das Aufschieben des Indexelementes (4) (der Indexelemente) vorgesehenen Bereich eine im Wesentlichen zylindrische Außenmantelfläche (9) aufweist.

6. Betätigungselement nach einem der Ansprüche 1 bis 5, **dadurch gekennzeichnet, dass** ein erstes Führungselement (11) der Führungseinrichtung in dem für das Aufschieben des Indexelementes (4) (der Indexelemente) vorgesehenen Bereich einer Außenmantelfläche (9) des Kupplungsteils (3) angeordnet, vorzugsweise einstückig angeformt, ist.

7. Betätigungselement nach einem der Ansprüche 1 bis 6, **dadurch gekennzeichnet, dass** das Indexelement (4) (die Indexelemente) eine im Wesentlichen kreisrunde Ausnehmung (10) aufweist (aufweisen), mit dem es (sie) auf das Kupplungsteil (3) aufschiebbar ist (sind).

8. Betätigungselement nach einem der Ansprüche 1 bis 7, **dadurch gekennzeichnet, dass** das Indexelement (4) (die Indexelemente) eine Ausnehmung (10) aufweist (aufweisen), an der ein zweites Führungselement (12) der Führungseinrichtung angeordnet, vorzugsweise einstückig angeformt, ist.

9. Betätigungselement nach einem der Ansprüche 1 bis 8, **dadurch gekennzeichnet, dass** das Indexelement (4) im Wesentlichen ringförmig ausgebildet ist und/oder auf dem Kupplungsteil (3) zumindest eine in Montagestellung von außen sichtbare Indexmarke (13) aufweist.

10. Betätigungselement nach einem der Ansprüche 1 bis 9, **dadurch gekennzeichnet, dass** die Führungseinrichtung (11, 12) eine Verzahnung mit parallel zur Rotationsachse (5) des Kupplungsteils (3) verlaufenden im auf den Kupplungsteil (3) aufgeschobenen Zustand des Indexringes (4) (der Indexringe) ineinandergreifenden Erhebungen und Vertiefungen, vorzugsweise Zähnen, aufweist.

11. Betätigungselement nach einem der Ansprüche 1 bis 10, **dadurch gekennzeichnet, dass** die Führungseinrichtung ein erstes Führungselement, (11) mit zumindest einer Erhöhung oder Vertiefung und ein zweites Führungselement (12) mit mehreren Erhöhungen oder Vertiefungen aufweist, wobei die zumindest eine Erhöhung oder Vertiefung des ersten Führungselementes (11) im auf den Kupplungsteil (3) aufgeschobenen Zustand des Indexringes (4) (der Indexringe) mit den Erhöhungen oder Vertiefungen des zweiten Führungselements (12) in Eingriff steht.

12. Betätigungselement nach Anspruch 11, **dadurch gekennzeichnet, dass** das erste Führungselement (11) an dem Kupplungsteil (3), vorzugsweise an einer Außenmantelfläche (9) des Kupplungsteils (3) angeordnet, vorzugsweise einstückig angeformt, ist und das zweite Führungselement (12) an dem Indexelement (4), vorzugsweise in einer Ausnehmung (10) des Indexelementes (4), angeordnet, vorzugsweise einstückig angeformt, ist oder umgekehrt.

13. Betätigungselement nach Anspruch 11 oder 12, **dadurch gekennzeichnet, dass** das erste Führungselement (11) und/oder das zweite Führungselement (12) eine Abfolge von sich über einen Winkelbereich von 360° erstreckenden, vorzugsweise gleichmäßig inkrementierten, Erhöhungen und Vertiefungen aufweist (aufweisen).

14. Betätigungselement nach einem der Ansprüche 1 bis 13, **dadurch gekennzeichnet, dass** eine am Betätigungselement fixierbare, vorzugsweise auf das Betätigungselement aufschraubbare, Abdeckung (6) vorgesehen ist, welche im auf dem Betätigungselement fixierten Zustand ein Abziehen des Indexelementes (4) (der Indexelemente) vom Kupplungsteil (3) unterbindet.

15. Betätigungselement nach einem der Ansprüche 3 bis 14, **dadurch gekennzeichnet, dass** das Kupplungsteil (3) und/oder eine Übertragungseinrichtung (7) zur Übertragung einer Drehbewegung des Kupplungsteils (3), vorzugsweise auf eine ein- und/oder ausschraubbare Spindel (14), eine Rasteinrichtung (15), die ein inkrementiertes Verdrehen des Kupplungsteils (3) und/oder der Übertragungseinrichtung (7) sicherstellt, aufweist (aufweisen), wobei die Inkrementierung der Rasteinrichtung (15) und die durch die Führungseinrichtung (11, 12) vorgegebene Inkrementierung zum Aufschieben des Indexelementes (4) (der Indexelemente) auf das Kupplungsteil (3), vorzugsweise in Position und Schrittweite, übereinstimmen.

16. Betätigungselement nach einem der Ansprüche 1 bis 15, **dadurch gekennzeichnet, dass** auf dem Kupplungsteil (3) eine im aufgeschraubten Zustand des (der) Indexelemente(s) (4) von außen sichtbare Beschriftung (27) mit einem Nullpunkt (32) vorgesehen ist.

17. Zieleinrichtung, insbesondere Zielfernrohr, mit einem Betätigungselement nach einem der Ansprüche 1 bis 16.

## Claims

1. Actuator for setting at least one optical property, in particular the position of a crosshair, of an aiming device, in particular of a telescopic sight, comprising a coupling part rotatable about an axis of rotation, onto which at least one index element ca n be pushed, **characterized in that** th e actu ator has a guiding device (11, 12) for guiding the index element (4) onto the coupling part (3) which makes it possible to push the index element (4) onto the coupling part (3) in the direction of the axis of rotation (5) of the coupling part (3) and prevents a rotation of the index element (4) relative to the coupling part (3) when it is completely and/or partly pushed onto the coupling part (3) at least in a direction perpendicular to the axis of rotation (5), preferably in all directions.

2. Actuator according to claim 1, **characterized in that** the guiding device (11, 12) makes it possible to push the index element (4) onto the coupling part (3) in several angles, different from one another, relative to the axis of rotation (5).

3. Actuator according to claim 2, **characterized in that** the several angles different from one another are incremented, preferably uniformly.

4. Actuator according to one of claims 1 to 3, **characterized in that** several, preferably two or three or four index elements (4) can be pushed onto the coupling part (3), wherein these index elements (4) can be arranged simultaneously on the coupling part (3).

5. Actuator according to one of claims 1 to 4, **characterized in that** the coupling part (3) has a substantially cylindrical outer surface area (9) at least in the area provided for pushing on of the index element(s) (4).

6. Actuator according to one of claims 1 to 5, **characterized in that** a first guiding element (11) of the guiding device is attached, preferably moulded on in one piece, in the area provided for pushing on the index element(s) (4), to an outer surface area (9) of the coupling part (3).

7. Actuator according to one of claims 1 to 6, **characterized in that** the index element(s) (4) has (have) a substantially circular recess (10), with which it (they) can be pushed onto the coupling part (3).

8. Actuator according to one of claims 1 to 7, **characterized in that** the index element(s) (4) has (have) a recess (10), to which a second guiding element (12) of the guiding device is attached, preferably moulded on in one piece.

9. Actuator according to one of claims 1 to 8, **characterized in that** the index element (4) is formed substantially annular and/or has at least one index mark (13) visible from outside in the assembly position on the coupling part (3).

10. Actuator according to one of claims 1 to 9, **characterized in that** the guiding device (11, 12) has a toothing with ridges and recesses, preferably teeth, running parallel to the axis of rotation (5) of the coupling part (3) and engaging with one another when the index ring(s) (4) is (are) pushed onto the coupling part (3).

11. Actuator according to one of claims 1 to 10, **characterized in that** the guiding device has a first guiding element (11) with at least one ridge or recess and a second guiding element (12) with several ridges or recesses, wherein the at least one ridge or recess of the first guide element (11) engages with the ridges or recesses of the second guiding element (12) when the index ring(s) (4) is (are) pushed onto the coupling part (3).

12. Actuator according to claim 11, **characterized in that** the first guiding element (11) is attached, preferably moulded on in one piece, to the coupling part (3), preferably to an outer surface area (9) of the coupling part (3), and the second guiding element (12) is attached, preferably moulded on in one piece, to the index element (4), preferably in a recess (10) of the index element (A), or vice versa.

13. Actuator according to claim 11 or 12, **characterized in that** the first guiding element (11) and/or the second guiding element (12) has (have) a succession of ridges and recesses extending over an angular range of 360°, preferably uniformly incremented.

14. Actuator according to one of claims 1 to 13, **characterized in that** a cover (6), which can be fixed, preferably screwed, onto the actuator, is provided, which prevents the index element(s) (4) from being pulled off from the coupling part (3) when fixed to the actuator.

15. Actuator according to one of claims 3 to 14, **characterized in that** the coupling part (3) and/or a transmission device (7) has (have), for the transmission of a rotary movement of the coupling part (3), preferably onto a spindle (14) which can be screwed in and/or unscrewed, a catch (15) which ensures an incremented rotation of the coupling part (3) and/or of the transmission device (7), wherein the incrementation of the catch (15) and the incrementation predetermined by the guiding device (11, 12) for pushing the index element(s) (4) onto the coupling part (3) are the same, preferably in position and step width.

16. Actuator according to one of claims 1 to 15, **characterized in that** a scale (27), visible from the outside when the index element(s) (4) is (are) screwed on, with a zero point (32), is provided on the coupling part (3).

17. Aiming device, in particular telescopic sight, with an actuator according to one of claims 1 to 16.

## Revendications

1. Elément d'actionnement pour le réglage d'au moins une propriété optique, en particulier de la position d'un repère de visée, d'un viseur, en particulier d'une lunette de visée, avec une partie d'accouplement pouvant tourner autour d'un axe de rotation, sur laquelle peut être enfilé au moins un élément indicateur, **caractérisé en ce que** l'élément d'actionnement présente un dispositif de guidage (11, 12) pour le guidage de l'élément indicateur (4) sur la partie de couplage (3), lequel dispositif de guidage permet d'enfiler l'élément indicateur (4) sur la partie d'accouplement (3) en direction de son axe de rotation (5) et empêche une rotation de l'élément indicateur (4) par rapport à la partie d'accouplement (3) dans l'état complètement et/ou partiellement enfilé sur la partie d'accouplement (3) au moins dans une direction perpendiculaire à l'axe de rotation (5), de préférence dans toutes les directions.

2. Elément d'actionnement selon la revendication 1, **caractérisé en ce que** le dispositif de guidage (11, 12) permet d'enfiler l'élément indicateur (4) sur la partie d'accouplement (3) dans plusieurs positions angulaires relatives à l'axe de rotation (5), différentes les unes des autres.

3. Elément d'actionnement selon la revendication 2, **caractérisé en ce que** les plusieurs positions angulaires différentes les unes des autres sont incrémentées de préférence régulièrement.

4. Elément d'actionnement selon l'une quelconque des revendications 1 à 3, **caractérisé en ce que** plusieurs, de préférence deux ou trois ou quatre éléments indicateurs (4) peuvent être enfilés sur la partie d'accouplement (3), sachant que ces éléments indicateurs (4) peuvent être disposés en même temps sur la partie d'accouplement (3).

5. Elément d'actionnement selon l'une quelconque des revendications 1 à 4, **caractérisé en ce que** la partie d'accouplement (3) présente une surface enveloppe extérieure (9) sensiblement cylindrique au moins dans la zone prévue pour enfiler l'élément indicateur (4) (les éléments indicateurs).

6. Elément d'actionnement selon l'une quelconque des revendications 1 à 5, **caractérisé en ce qu'**un premier élément de guidage (11) du dispositif de guidage est disposé, de préférence formé d'un seul tenant dans la zone prévue pour enfiler l'élément indicateur (4) (les éléments indicateurs) d'une surface enveloppe extérieure (9) de la partie d'accouplement (3).

7. Elément d'actionnement selon l'une quelconque des revendications 1 à 6, **caractérisé en ce que** l'élément indicateur (4) (les éléments indicateurs) présente(nt) un évidement (10) sensiblement circulaire, avec lequel il(s) peut/peuvent être enfilé(s) sur la partie d'accouplement (3).

8. Elément d'actionnement selon l'une quelconque des revendications 1 à 7, **caractérisé en ce que** l'élément indicateur (les éléments indicateurs) présente(nt) un évidement (10), sur lequel est disposé, de préférence formé d'un seul tenant un second élément de guidage (12) du dispositif de guidage.

9. Elément d'actionnement selon l'une quelconque des revendications 1 à 8, **caractérisé en ce que** l'élément indicateur (4) est réalisé de manière sensiblement annulaire et/ou présente, sur la partie d'accouplement (3), au moins un repère (13) visible de l'extérieur en position de montage.

10. Elément d'actionnement selon l'une quelconque des revendications 1 à 9, **caractérisé en ce que** le dispositif de guidage (11, 12) présente une denture avec des élévations et des cavités, de préférence des dents, s'engrenant à l'état enfilé sur la partie d'accouplement (3) de l'anneau indicateur (4) (des anneaux indicateurs), s'étendant parallèlement à l'axe de rotation (5) de la partie d'accouplement (3).

11. Elément d'actionnement selon l'une quelconque des revendications 1 à 10, **caractérisé en ce que** le dispositif de guidage présente un premier élément de guidage (11) avec au moins une élévation ou cavité et un second élément de guidage (12) avec plusieurs élévations ou cavités, sachant qu'au moins une élévation ou cavité du premier élément de guidage (11) est en engagement à l'état enfilé sur la partie d'accouplement (3) de l'anneau indicateur (4) (des anneaux indicateurs) avec les élévations ou cavités du second élément de guidage (12).

12. Elément d'actionnement selon la revendication 11, **caractérisé en ce que** le premier élément de guidage (11) est disposé, de préférence formé d'un seul tenant sur la partie d'accouplement (3), de préférence sur une surface enveloppe extérieure (9) de la partie d'accouplement (3) et **en ce que** le second élément de guidage (12) est disposé, de préférence formé d'un seul tenant, sur l'élément indicateur (4), de préférence dans un évidement (10) de l'élément indicateur (4) ou inversement.

13. Elément d'actionnement selon la revendication 11 ou 12, **caractérisé en ce que** le premier élément de guidage (11) et/ou le second élément de guidage (12) présente(nt) une suite d'élévations et de cavités incrémentées de préférence régulièrement, s'étendant sur une zone angulaire de 360°.

14. Elément d'actionnement selon l'une quelconque des revendications 1 à 13, **caractérisé en ce qu'**un recouvrement (6) pouvant être fixé à l'élément d'actionnement, de préférence pouvant être vissé sur l'élément d'actionnement, est prévu, lequel empêche à l'état fixé sur l'élément d'actionnement un retrait de l'élément indicateur (4) (des éléments indicateurs) de la partie d'accouplement (3).

15. Elément d'actionnement selon l'une quelconque des revendications 3 à 14, **caractérisé en ce que** la partie d'accouplement (3) et/ou un dispositif de transmission (7) présente(nt) pour la transmission d'un mouvement de rotation de la partie d'accouplement (3), de préférence à une broche (14) pouvant être vissée et/ou dévissée, un dispositif d'encliquetage (15) qui assure une rotation incrémentée de la partie d'accouplement (3) et/ou du dispositif de transmission (7), sachant que l'incrémentation du dispositif d'encliquetage (15) et l'incrémentation prescrite par le dispositif de guidage (11, 12) concordent de préférence en position et incrément pour enfiler l'élément indicateur (4) (les éléments indicateurs) sur la partie d'accouplement (3).

16. Elément d'actionnement selon l'une quelconque des revendications 1 à 15. **caractérisé en ce qu'**une inscription (27) visible de l'extérieur à l'état vissé de/des éléments indicateurs (4) avec un point zéro (32) est prévue sur la partie d'accouplement (3).

17. Viseur, en particulier lunette de visée, présentant un élément d'actionnement selon l'une quelconque des revendications 1 à 16.
